# EUROPEAN PATENT SPECIFICATION

(11) **EP 4 536 421 B1**
(45) Date of publication and mention of the grant of the patent: **08.04.2026**
(21) Application number: 23731381.2
(22) Date of filing: 01.06.2023
(51) Int. Cl.: B21D 28/22, B21D 43/16, B21D 43/22, B21D 53/00, H02K 15/02

(54) **APPARATUS AND METHOD FOR COLLECTING BULK LAYERED PACKS FOR ELECTRICAL USE**
VORRICHTUNG UND VERFAHREN ZUM SAMMELN VON GESCHICHTETEN MASSENPAKETEN ZUR ELEKTRISCHEN VERWENDUNG
APPAREIL ET PROCÉDÉ COLLECTE DE PAQUETS EN COUCHES EN VRAC POUR UTILISATION ÉLECTRIQUE

(30) Priority: 07.06.2022 IT 202200012038
(43) Date of publication of application: 16.04.2025
(73) Proprietor: Corrada S.p.A, 20020 Lainate (MI) (IT)
(72) Inventor: PIZZOCRI, Ambrogio, 20857 CAMPARADA (MB) (IT); KHAJEHMIRZA, Hamed, 20017 RHO (MI) (IT)
(74) Representative: Ripamonti, Enrico
(86) International application number: PCT/IB2023/055652
(87) International publication number: WO 2023/237982

(56) References cited:
- EP-A2- 0 995 516
- DE-A1- 2 547 803
- DE-A1- 2 606 689
- US-A- 4 383 356
- US-A- 4 710 085
- US-A1- 2018 200 778

## Description

The present invention relates to an apparatus for collecting bulk layered packs for electrical use.

More in detail, the present invention relates to an apparatus for collecting layered packs for electrical use and, even more in detail, to an apparatus adapted to collect bulk packs of metal plates cut by a cutting die for subsequently forming layered packs for use in electrical machines, such as motors, generators, transformers, meters, ignition coils and similar electric equipment.

As it is known, the magnetic metal plates necessary for forming the layered packs are obtained starting from a metal sheet which is subjected to cutting operations by means of dedicated dies which obtain the metal plates starting from a strip or sheet and which comprise at least one detachment matrix provided with a relative brake and a punch, such devices being adapted to detach and subsequently pack the cut metal plates to form the layered pack.

The cut metal plates may be packed bulk (i.e., not rigidly bound together to define the finished product) for transport, storage, control or subsequent processing needs or, again, for particular and specific production needs (such as handling, alignment of the packs or management of the heights thereof (meant in terms of size of the layered packs in the warehouse), improvement of the efficiency of the production processes (such as, for example, increase in production speeds or personnel downsizing) and, also, for improving storage flexibility, reducing storage costs (in fact, packs of bulk metal plates are placed in the warehouse, which may be subsequently arranged in different heights instead of having, as it conventionally happens, stocks/groups of dedicated metal plates according to the desired heights).

The apparatuses for collecting bulk layered packs of the conventional type have a drawback linked to the fact that they do not guarantee the correct alignment and orientation of the stacked or packed bulk metal plates; the alignment and orientation are then carried out manually by an operator and this causes an extension of the production times which entails a consequent increase in production costs.

A further drawback of conventional apparatuses for accumulating bulk metal plates is that such apparatuses are not positioned inside the cutting die and, therefore, require the preparation of modifications to the base of the cutting press.

Apparatuses for accumulating bulk metal plates positioned below the die and the press plane are known.

For example, US2018/200778, which forms the basis for the preamble of claim 1, describes an accumulation device for cut metal plates arranged below a cutting die and comprising a vertically movable cylinder which collects the cut metal plates and brings them to a conveyor belt.

Document EP0995516 describes a device for stamping metal plates which comprises a guiding device for guiding the stamped sheets under the die and which comprises elements for locking and circumferentially gripping the cut metal plates.

Document US4383356 describes an apparatus for forming layered packs including means for radially and circumferentially aligning said packs and devices for accumulating and unloading the layered packs formed outside a cutting die.

A further example of an accumulation device for bulk metal plates is described in US4710085 which refers to an accumulation device which is vertically movable and located outside a cutting die.

However, even such a solution involves drawbacks related to the fact that more space and a modification of the press are required to allow for the adaptation and positioning of the accumulation apparatus.

It is the object of the present invention to obviate the drawbacks disclosed above.

More in detail, it is the object of the present invention to provide an apparatus for collecting bulk layered packs for electrical use adapted to allow the collected layered packs to be aligned and oriented (both transversely and rotationally) in an automatic manner and without the manual intervention of an operator.

It is a further object of the present invention to provide an apparatus for collecting layered packs which is adapted to allow for a drastic reduction in production times downstream of the metal plate cutting operation and, consequently, a reduction in production costs.

It is a further object of the present invention to provide an apparatus for collecting layered packs which is fully arranged inside a cutting die.

It is a further object of the present invention to provide an apparatus for collecting layered packs which is adapted to be easily adapted to any die and cutting press without the need for modifying the die and/or the press.

It is a further object of the present invention to provide an apparatus for collecting layered packs which is adapted to increase the safety level of the cutting apparatus during the operations of cutting and collecting the cut metal plates.

It is a further object of the present invention to make available to users an apparatus for collecting bulk layered packs, which is adapted to guarantee high strength and reliability over time and, furthermore, so as to be made easily and cost-effectively.

These and other objects are achieved by the invention having the features outlined in claim 1.

According to the invention, an apparatus is provided for collecting bulk layered packs for electrical use cut by a cutting die for forming layered packs for use in electrical machines, such as motors, generators, transformers, meters, ignition coils and similar electric equipment, arranged inside a cutting die which comprises a detachment matrix, a lower upright arranged coaxially to and below said detachment die, a brake coupled to the lower upright and coaxially thereto, a lower base arranged below the lower upright, the apparatus which comprises a central cylinder coaxially and centrally arranged with respect to the detachment matrix comprising first means for accumulating cut metal plates, second means for accumulating the cut metal plates arranged below the central cylinder and means for unloading a pack of cut metal plates arranged below the central cylinder and inside the lower base and movable with respect thereto. Advantageous embodiments of the invention become apparent from the dependent claims.

The construction and functional features of the apparatus for collecting bulk layered packs for electrical use of the present invention may be better understood from the following detailed description in which reference is made to the accompanying drawings which show an embodiment thereof given only by way of explanation and not by way of limitation, and in which:
Figure 1 diagrammatically shows a view according to a longitudinal cross-section plane of the apparatus for collecting bulk layered packs for electrical use of the present invention;
Figures 2 to 8 diagrammatically show the sequence of the operating steps for the operation of the apparatus of the invention.

With reference to the cited Figures, the apparatus for collecting bulk layered packs for electrical use of the present invention, indicated as a whole with 10 in the Figures, is arranged inside a cutting die comprising a detachment matrix 12 centrally provided with an opening 12' corresponding to the outer shape of the metal plate to be made starting from a metal sheet, a lower upright 13 of the die arranged coaxially to and below said detachment matrix 12 and likewise centrally provided with an opening 13' coaxial to that of the detachment matrix, a brake 11 for the die coupled to the lower upright 13, coaxially thereto at the opening 13' thereof, a lower base 14 arranged below the lower upright 13 and coaxially thereto and centrally provided with an opening 14' coaxial to the central openings 12' and 13', respectively of the detachment matrix 12 and of the lower upright 13.

Coaxially and centrally to the detachment matrix 12 and to the lower upright 13, a central cylinder 16 is arranged, the outer diameter and shape thereof corresponding to the inner shape (or inner diameter) of the metal plate cut from the metal sheet, with said central cylinder 16 comprising first functional elements to allow an accumulation of cut metal plates 17, the features and operation of which will be better described below.

The second functional elements cooperate with the first functional elements of the central cylinder during the action of accumulating the cut metal plates 17 and are stabilized below the lower upright 13 as better described below. Below the central cylinder 16, coaxially thereto and inside the lower base 14 (more in detail, in the central opening 14') an unloading element is arranged for the metal plates accumulated at the central cylinder 16.

The first functional elements to allow an accumulation of cut metal plates 17 at the central cylinder 16 comprise a pair of opposed flaps 18 having the fulcrum at an end portion 18' thereof with respect to said central cylinder 16 at the side wall thereof, and longitudinally extending according to a direction parallel to the axis of the central cylinder itself, and means for actuating said opposed levers 18 defined by a pair of opposed actuators 19, preferably pneumatic pistons, stabilized onto the central cylinder 16 according to a direction perpendicular to the axis of the central cylinder and at the end of the opposed flaps 18, opposed to the one having the fulcrum with respect to the central cylinder itself.

The second functional elements which cooperate with the elements of the central cylinder during the action of accumulating the metal plates 17 described above, comprise a pair of opposed slides 20 which are movably stabilized with respect to the lower upright 13 according to a direction perpendicular with respect to the axis of the central cylinder 16.

The unloading element for the cut metal plates accumulated at the central cylinder 16 comprises a lifting device 22 which is movable vertically according to an axial direction (by means of actuation means of the pneumatic or electric or similarly known type - not shown in the Figures) and which, as better detailed below, operates as a lift, for collecting the cut metal plates 17 accumulated by the central cylinder and for unloading them onto a conveyor belt (not shown) of the cutting die.

Said lifting device 22 comprises a central block 22' provided with a base 22B (oriented perpendicularly with respect to the axis of the central block 22') outside of which a pair of protruding appendages 22" is stabilized, extending from a lower end or front of said central block 22', vertically in the direction of the central cylinder 16 to define a space 23 for accumulating the cut metal plates 17 and with said pair of protruding appendages 22" abutting against a lower front 14" of the lower base 14.

The lifting device 22 comprises a central cone 24 which extends perpendicularly with respect to the base 22B and which is oriented in the direction of the central cylinder 16; said central cone 24 allowing a precise coupling between the central cylinder 16 and the lifting device 22 for the functions better explained below.

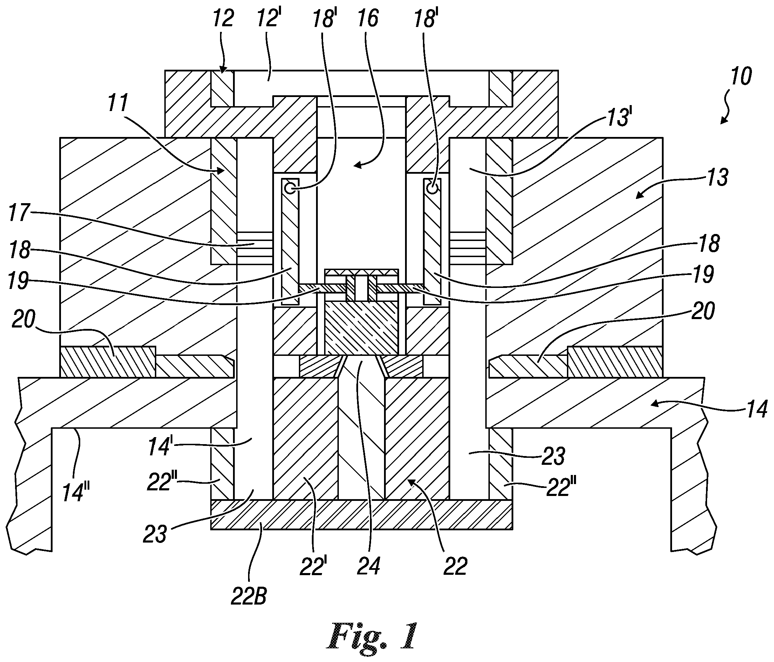

The operation of the apparatus for collecting bulk layered packs for electrical use of the present invention, described above with reference to the technical-constructive features, is described in detail below with reference to Figures 1 to 8.

With reference to Figure 1, the metal plates 17 cut by the cutting die from the detachment die 12 accumulate inside the brake 11 of the die and fall (by gravity) on the device 22, thus accumulating one on the other in the accumulation space 23 up to a predefined height, according to the number of strokes of the cutting press; during this step, the central cylinder 16 is supported by the device 22.

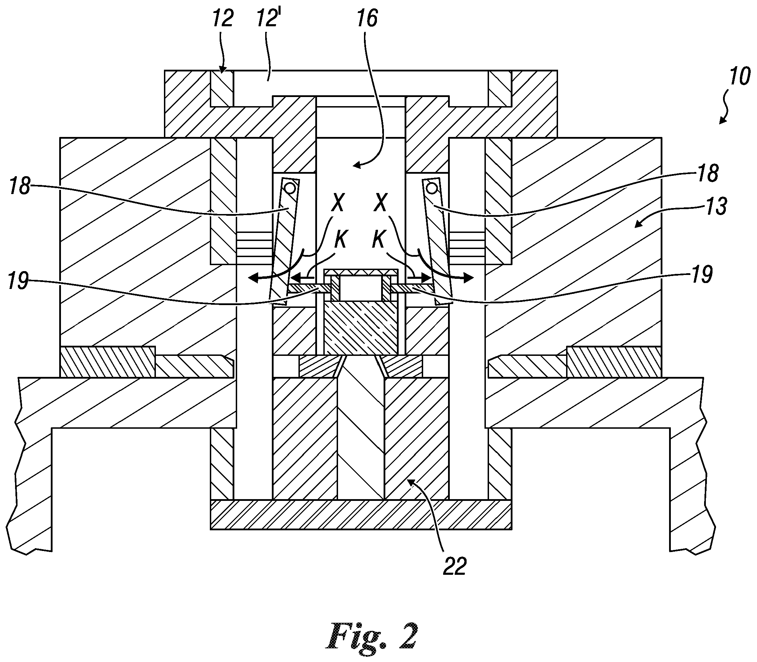

Subsequently (Figure 2), a solenoid valve (not shown) introduces air into the device 22 and activates the pair of opposed actuators 19 which act on the pair of opposed flaps 18 which (as indicated by the arrows "K" in Figure 2), due to the fulcrum constraint with respect to the central cylinder 16, incline away from each other with respect to the constraint point, to define a conicity (as indicated by the arrows "X" in Figure 2).

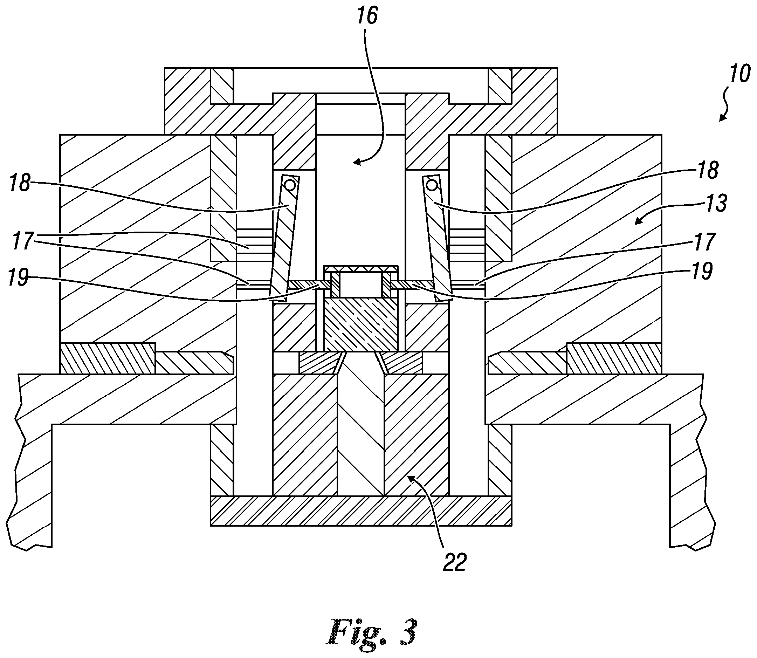

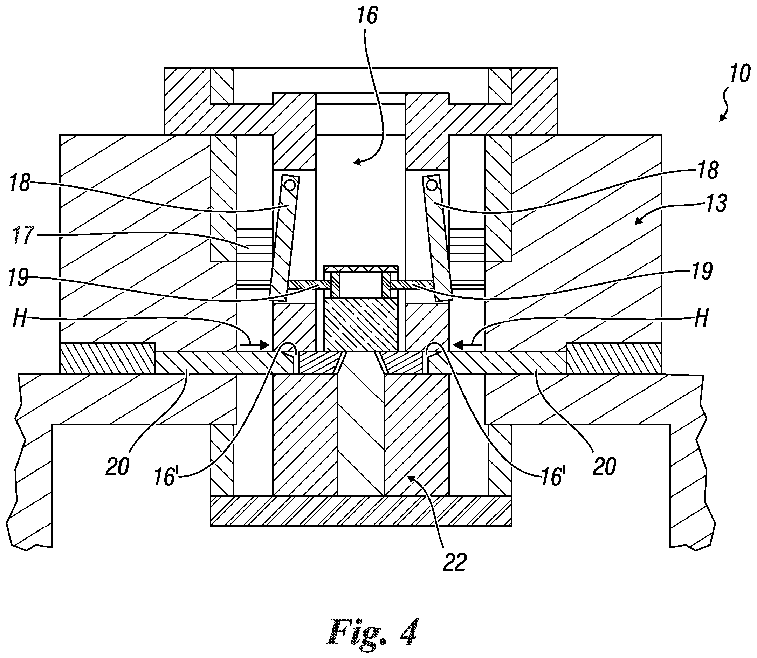

In such condition, the cut metal plates 17 which fall from the brake 11 by gravity, as described above, are blocked by the pair of opposed flaps 18 activated by the pair of opposed actuators 19 (diagrammatically shown in Figure 3). Subsequently (Figure 4), two solenoid valves and pneumatic cylinders (not shown, since they are of a known type) activate a movement of the pair of opposed slides 20 which move towards each other (as indicated by the arrows "H" in Figure 4) with respect to the axis of the central cylinder 16 and position themselves below the front or lower base 16' of the central cylinder 16, allowing it to be supported, as better detailed below).

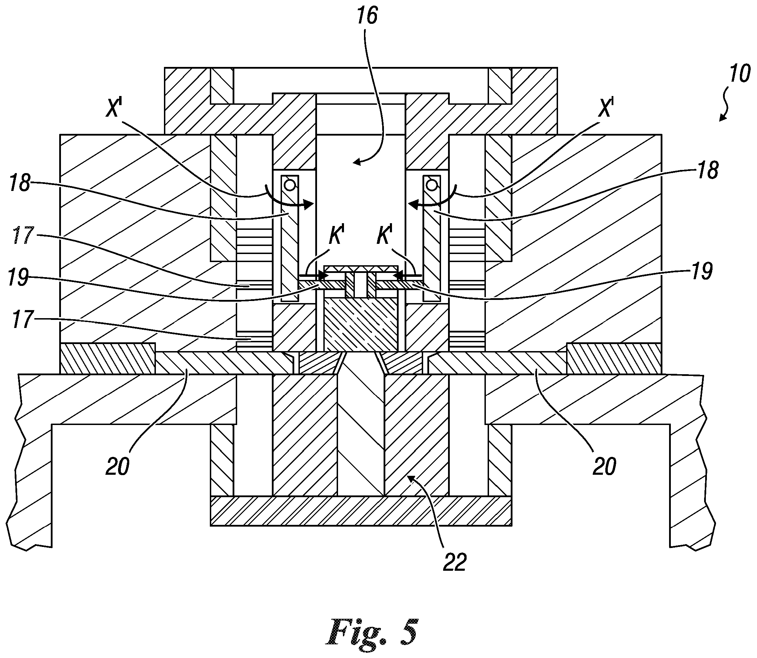

At this point (Figure 5), by means of a solenoid valve, the pair of opposed actuators 19 acting on the pair of opposed flaps 18, which (as indicated by the arrows "K'" in Figure 5) return to the vertical position (as indicated by the arrows "X'" in Figure 5), is activated; therefore, the metal plates 17 which were blocked by the pair of opposed flaps 18 fall onto the pair of opposed slides 20.

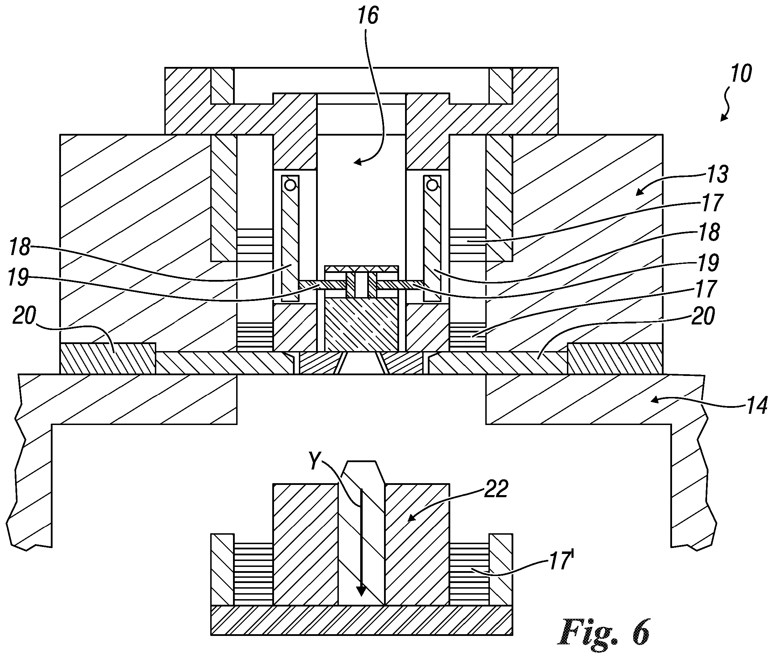

Figure 6 shows the unloading of a group of accumulated metal plates and, in particular, with the apparatus in the configuration shown in Figure 5, the device 22, which is vertically movable and on which a pack 17' of superimposed metal plates 17 is collected, lowers (as indicated by arrow "Y" in the Figure) inside the lower base 14 reaching the level of a conveyor belt (not shown) onto which the pack 17' of metal plates 17 is unloaded.

The operation for unloading the pack 17' of metal plates 17 onto the conveyor belt occurs synchronously with the accumulation of a new quantity of cut metal plates 17 onto the pair of opposed slides 20.

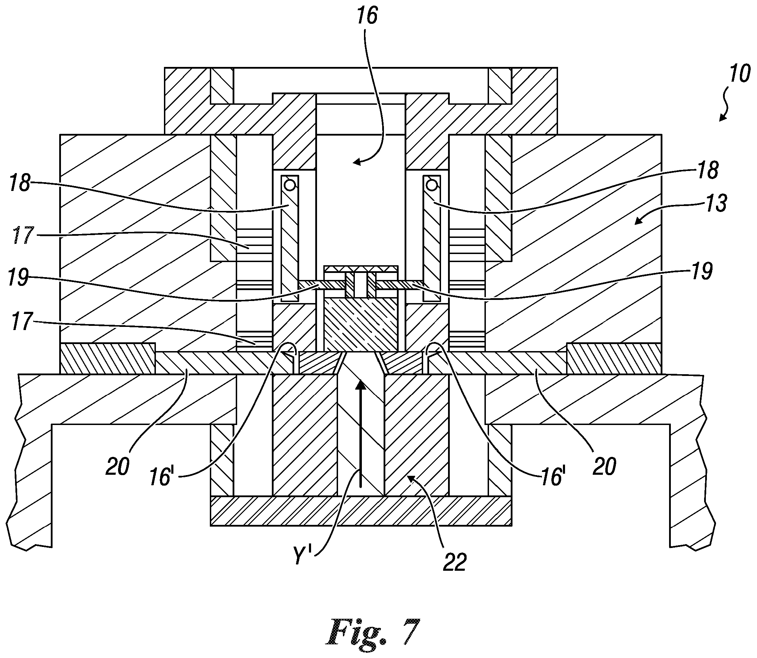

Once the device 22 has unloaded the pack 17' of metal plates 17, it rises (as indicated by arrow "Y'" in Figure 7) inside the lower base 14 and returns to contact with the lower front or base 16' of the central cylinder 16.

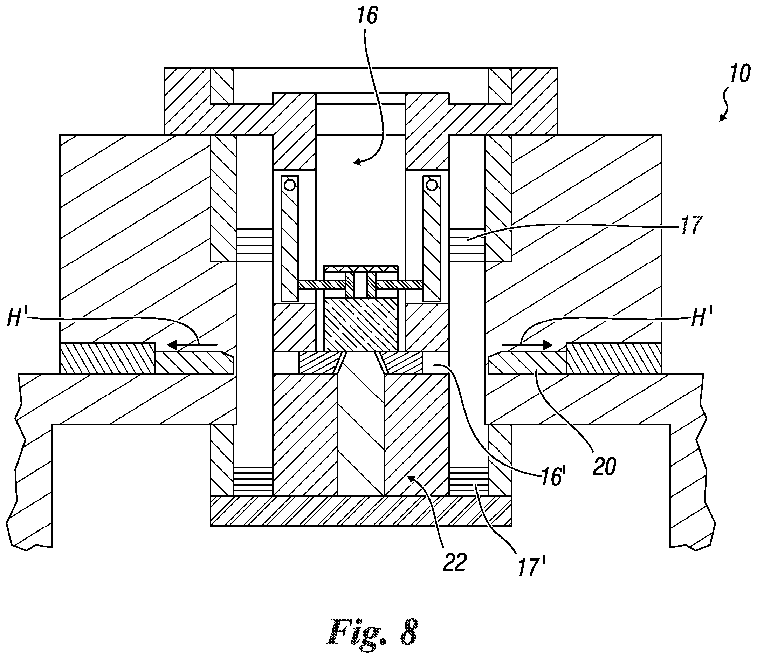

In such configuration, the pair of opposed slides 20 disengages from the contact with the lower front or base 16' of the central cylinder 16, with said slides that are moved away from each other (as indicated by the arrows "H'" in Figure 8) thus allowing the cut metal plates 17 to fall onto the device 22.

As it may be understood from the foregoing, the advantages that the apparatus for collecting bulk layered packs for electrical use of the invention achieves are evident.

The apparatus for collecting bulk layered packs for electrical use of the invention advantageously allows for a collection of bulk metal plates superimposed onto one another, oriented and aligned in a completely automatic manner with consequent correlated advantages in terms of reducing production times downstream of the metal plate cutting operation, by virtue of the fact that the intervention of the operator is no longer required for the manual orientation and alignment of said collected metal plates.

A further advantage of the apparatus of the invention is that it allows to increase the safety level of the apparatus during the steps of cutting the metal plates and collecting them, and this by virtue of the mobile slides for the temporary collection of the cut metal plates.

A further advantage of the apparatus of the invention is that it is entirely contained in the cutting die with a consequent smaller footprint and without the need to modify the structure of the base of the press.

The fact that the apparatus of the invention, being contained inside the die, is very versatile and may be easily adapted to any die and cutting press is a further advantage.

## Claims

1. An apparatus (10) for collecting bulk layered packs for electrical use cut by a cutting die for forming layered packs for use in electrical machines, such as motors, generators, transformers, meters, ignition coils and similar electric equipment, wherein
it comprises a central cylinder (16) configured to be coaxially and centrally arranged with respect to a detachment matrix (12) of a cutting die and comprising second means for accumulating the cut metal plates (17) arranged below the central cylinder (16) and the first accumulating means and comprising a pair of opposed mobile slides (20) and means for unloading a pack (17') of cut metal plates comprising a vertically movable lifting device below the central cylinder (16) and, when in use with a cutting die, configured to be inside a lower base (14) of the cutting die arranged below a lower upright (13) of the cutting die arranged coaxially and below with respect to the detachment matrix (12),
**characterized in that** the apparatus further comprises a first means for accumulating metal plates (17) cut by the cutting die and comprising a pair of opposed mobile levers (18) to temporarily stop the cut metal plates.

2. An apparatus according to claim 1, **characterized in that** the pair of opposed flaps (18) has the fulcrum at an end portion (18') thereof with respect to the central cylinder (16) at the side wall thereof and longitudinally extending according to a direction parallel to the axis of said central cylinder (16) and actuation means of said opposed levers (18).

3. A collecting apparatus according to claim 1 or 2, **characterized in that** the actuation means of the opposed levers (18) comprise a pair of opposed actuators (19), of the pneumatic piston type, stabilized at the central cylinder (16) according to a direction perpendicular to the axis of said central cylinder and at the end of the opposed flaps (18) which is opposed to the one having the fulcrum with respect to the central cylinder itself, said actuators actuating the opposed levers (18) which rotate with respect to the point of fulcrum mutually moving away/close.

4. A collecting apparatus according to claim 1, **characterized in that** the pair of opposed mobile slides (20) is stabilized below the lower upright (13).

5. A collecting apparatus according to claim 4, **characterized in that** the opposed slides (20) are movable according to a direction perpendicular to the axis of the central cylinder (16), mutually moving close to define an engagement and contact configuration with the lower front (16') of the central cylinder (16) and mutually moving away to define a condition of detachment with respect to the lower front (16') of the central cylinder (16).

6. A collecting apparatus according to claim 1, **characterized in that** the lifting device (22) is vertically movable according to an axial direction between a contact configuration with a lower front (16') of the central cylinder (16) and a detachment configuration with respect to said central cylinder (16), the contact configuration with the lower front (16') of the central cylinder (16) defining an accumulation or loading configuration of a pack (17') of cut metal plates (17) and the detachment configuration with respect to the central cylinder (16) defining an unloading configuration of said pack (17') of metal plates (17), said lifting device (22) comprising a central cone (24) extending perpendicular with respect to a base (22B) and oriented in the direction of the central cylinder (16) and defining a precise coupling between the central cylinder (16) and the lifting device (22) in the contact configuration.

7. A collecting apparatus according to claim 6, **characterized in that** the lifting device (22) comprises a central block (22') provided with a base (22B) perpendicular with respect to the axis of the central block (22') outside of which a pair of protruding appendages (22") is stabilized, extending vertically from said base (22B) in the direction of the central cylinder (20) to define a space (23) for accumulating a pack (17') of cut metal plates (17).

8. A method for collecting bulk layered packs for electrical use, **characterized in that** it comprises the steps of:
- cutting the metal plates (17);
- falling by gravity and accumulating said metal plates (17) to define a pack (17') on the lifting device (22);
- actuating the pair of opposed levers (18) to temporarily stop the fall of the cut metal plates (17) in the direction of the lifting device (22);
- actuating the pair of opposed slides (20) to support the central cylinder (16);
- actuating the pair of opposed levers (18) for a falling release of the cut metal plates (17) on the pair of opposed slides (20);
- actuating the lifting device (22) downwards while moving away from the central cylinder (16) and unloading the pack (17') of metal plates (17);
- actuating the lifting device (22) upwards in contact with the central cylinder (16);
- actuating the pair of opposed slides (20) for a gravity falling release of the cut metal plates (17) on the lifting device (22).

9. The method according to claim 8, **characterized in that** the step of actuating the pair of opposed levers (18) for a falling release of the cut metal plates (17) on the pair of opposed slides (20) occurs synchronized with the step of actuating the lifting device (22) downwards while moving away from the central cylinder (16) and unloading the pack (17') of metal plates (17).

## Patentansprüche

1. Vorrichtung (10) zum Sammeln von in großen Mengen anfallenden geschichteten Paketen für elektrische Anwendungen, die mittels eines Schneidwerkzeugs zur Bildung von Schichtpaketen für den Einsatz in elektrischen Maschinen, wie Motoren, Generatoren, Transformatoren, Zählern, Zündspulen und ähnlichen elektrischen Geräten, ausgeschnitten werden, wobei sie einen Zentralzylinder (16) umfasst, der dazu ausgelegt ist, koaxial und mittig in Bezug auf eine Abstreifmatrix (12) eines Schneidwerkzeugs angeordnet zu sein, und zweite Mittel zum Sammeln der geschnittenen Metallbleche (17) umfasst, die unterhalb des Zentralzylinders (16) und der ersten Sammelmittel angeordnet sind und ein Paar einander gegenüberliegender beweglicher Gleitstücke (20) umfassen, sowie Mittel zum Entladen eines Pakets (17') geschnittener Metallbleche, umfassend eine vertikal bewegliche Hubvorrichtung unterhalb des Zentralzylinders (16), die im Gebrauch mit einem Schneidwerkzeug innerhalb einer unteren Grundplatte (14) des Schneidwerkzeugs angeordnet ist, welche unterhalb eines unteren Ständers (13) des Schneidwerkzeugs koaxial unterhalb der Abstreifmatrix (12) angeordnet ist, **dadurch gekennzeichnet, dass** die Vorrichtung ferner erste Mittel zum Sammeln der durch das Schneidwerkzeug geschnittenen Metallbleche (17) umfasst, die ein Paar einander gegenüberliegender beweglicher Hebel (18) zum vorübergehenden Anhalten der geschnittenen Metallbleche umfassen.

2. Vorrichtung nach Anspruch 1, **dadurch gekennzeichnet, dass** das Paar einander gegenüberliegender Klappen (18) einen Drehpunkt an einem Endabschnitt (18') derselben in Bezug auf den Zentralzylinder (16) an dessen Seitenwand aufweist und sich in Längsrichtung parallel zur Achse des Zentralzylinders (16) erstreckt, sowie Betätigungsmittel für die einander gegenüberliegenden Hebel (18) umfasst.

3. Sammelvorrichtung nach Anspruch 1 oder 2, **dadurch gekennzeichnet, dass** die Betätigungsmittel der einander gegenüberliegenden Hebel (18) ein Paar einander gegenüberliegender Aktuatoren (19) vom Typ pneumatischer Kolben umfassen, die am Zentralzylinder (16) in einer Richtung senkrecht zu dessen Achse und an dem dem Drehpunkt in Bezug auf den Zentralzylinder gegenüberliegenden Ende der Klappen (18) befestigt sind, wobei die Aktuatoren die einander gegenüberliegenden Hebel (18) betätigen, die sich um ihren Drehpunkt drehen und sich dabei voneinander weg bzw. aufeinander zu bewegen.

4. Sammelvorrichtung nach Anspruch 1, **dadurch gekennzeichnet, dass** das Paar einander gegenüberliegender beweglicher Gleitstücke (20) unterhalb des unteren Ständers (13) befestigt ist.

5. Sammelvorrichtung nach Anspruch 4, **dadurch gekennzeichnet, dass** die einander gegenüberliegenden Gleitstücke (20) in einer Richtung senkrecht zur Achse des Zentralzylinders (16) beweglich sind, sich einander annähern, um eine Eingriffs- und Kontaktstellung mit einer unteren Stirnfläche (16') des Zentralzylinders (16) zu definieren, und sich voneinander entfernen, um eine Freigabestellung gegenüber der unteren Stirnfläche (16') des Zentralzylinders (16) zu definieren.

6. Sammelvorrichtung nach Anspruch 1, **dadurch gekennzeichnet, dass** die Hubvorrichtung (22) vertikal in axialer Richtung zwischen einer Kontaktstellung mit einer unteren Stirnfläche (16') des Zentralzylinders (16) und einer Freigabestellung gegenüber dem Zentralzylinder (16) beweglich ist, wobei die Kontaktstellung mit der unteren Stirnfläche (16') des Zentralzylinders (16) eine Sammel- oder Beladestellung eines Pakets (17') geschnittener Metallbleche (17) definiert und die Freigabestellung gegenüber dem Zentralzylinder (16) eine Entladestellung des Pakets (17') von Metallblechen (17) definiert, wobei die Hubvorrichtung (22) einen Zentralkonus (24) umfasst, der sich senkrecht zu einer Basis (22B) erstreckt und in Richtung des Zentralzylinders (16) ausgerichtet ist und in der Kontaktstellung eine präzise Kupplung zwischen dem Zentralzylinder (16) und der Hubvorrichtung (22) definiert.

7. Sammelvorrichtung nach Anspruch 6, **dadurch gekennzeichnet, dass** die Hubvorrichtung (22) einen Zentralblock (22') mit einer Basis (22B) aufweist, die senkrecht zur Achse des Zentralblocks (22') angeordnet ist, außerhalb derer ein Paar vorspringender Fortsätze (22") befestigt ist, die sich vertikal von der Basis (22B) in Richtung des Zentralzylinders (16) erstrecken, um einen Raum (23) zum Sammeln eines Pakets (17') geschnittener Metallbleche (17) zu definieren.

8. Verfahren zum Sammeln von in großen Mengen anfallenden geschichteten Paketen für elektrische Anwendungen, **dadurch gekennzeichnet, dass** es die folgenden Schritte umfasst:
• Schneiden der Metallbleche (17);
• durch Schwerkraft erfolgendes Herabfallen und Sammeln der Metallbleche (17) zur Bildung eines Pakets (17') auf der Hubvorrichtung (22);
• Betätigen des Paars einander gegenüberliegender Hebel (18) zum vorübergehenden Anhalten des Falls der geschnittenen Metallbleche (17) in Richtung der Hubvorrichtung (22);
• Betätigen des Paars einander gegenüberliegender Gleitstücke (20) zur Abstützung des Zentralzylinders (16);
• Betätigen des Paars einander gegenüberliegender Hebel (18) zur Freigabe des Falls der geschnittenen Metallbleche (17) auf das Paar einander gegenüberliegender Gleitstücke (20);
• Abwärtsbewegen der Hubvorrichtung (22) unter gleichzeitiger Entfernung vom Zentralzylinder (16) und Entladen des Pakets (17') von Metallblechen (17);
• Aufwärtsbewegen der Hubvorrichtung (22) in Kontakt mit dem Zentralzylinder (16);
• Betätigen des Paars einander gegenüberliegender Gleitstücke (20) zur schwerkraftbedingten Freigabe der geschnittenen Metallbleche (17) auf die Hubvorrichtung (22).

9. Verfahren nach Anspruch 8, **dadurch gekennzeichnet, dass** der Schritt des Betätigens des Paars einander gegenüberliegender Hebel (18) zur Freigabe des Falls der geschnittenen Metallbleche (17) auf das Paar einander gegenüberliegender Gleitstücke (20) synchron mit dem Schritt des Abwärtsbewegens der Hubvorrichtung (22) unter gleichzeitiger Entfernung vom Zentralzylinder (16) und Entladen des Pakets (17') von Metallblechen (17) erfolgt.

## Revendications

1. Appareil (10) destiné à collecter des paquets stratifiés en vrac à usage électrique découpés par une matrice de découpe pour former des paquets stratifiés destinés à être utilisés dans des machines électriques, telles que des moteurs, des générateurs, des transformateurs, compteurs, bobines d'allumage et équipements électriques similaires dans lequel il comprend un cylindre central cylindre central (16) configuré pour être disposé de manière coaxiale et centrale par rapport à une matrice de détachement (12) d'une matrice de découpe et comprenant des seconds moyens pour accumuler les plaques métalliques découpées (17) disposés sous le cylindre central (16) et les premiers moyens d'accumulation et comprenant une paire de glissières mobiles opposées (20) et des moyens pour décharger un paquet (17') de plaques métalliques découpées comprenant un dispositif de levage mobile verticalement sous le cylindre central (16) et, lorsqu'il est utilisé avec une matrice de découpe, configuré pour être à l'intérieur d'une base inférieure (14) de la matrice de découpe disposée sous un montant inférieur (13) de la matrice de découpe disposés coaxialement et en dessous par rapport à la matrice de détachement (12)**caractérisé en ce que** l'appareil comprend en outre un premier moyen pour accumuler les plaques métalliques (17) découpées par la matrice de découpe et comprenant une paire de leviers mobiles opposés (18) pour arrêter temporairement les plaques métalliques découpées.

2. Appareil selon la revendication 1, **caractérisé en ce que** la paire de volets opposés (18) a le point d'appui à une partie d'extrémité (18') de celle-ci par rapport au cylindre central (16) au niveau de sa paroi latérale et s'étendant longitudinalement selon une direction parallèle à l'axe dudit cylindre central (16) et aux moyens d'actionnement desdits leviers opposés (18).

3. Dispositif de collecte selon la revendication 1 ou 2, **caractérisé en ce que** les moyens d'actionnement des leviers opposés (18) comprennent une paire d'actionneurs opposés (19), du type à piston pneumatique, stabilisés au niveau du cylindre central (16) selon une direction perpendiculaire à l'axe dudit cylindre central et à l'extrémité des volets opposés (18) opposées à celle ayant le point d'appui par rapport au cylindre central lui-même, lesdits actionneurs actionnant les leviers opposés (18) qui tournent par rapport au point d'appui en s'éloignant/se rapprochant mutuellement.

4. Un appareil de collecte selon la revendication 1, **caractérisé en ce que** la paire de glissières mobiles opposées (20) est stabilisée sous le montant inférieur (13).

5. Dispositif de collecte selon la revendication 4, **caractérisé en ce que** les glissières opposées (20) sont mobiles selon une direction perpendiculaire à l'axe du cylindre central (16), se rapprochant mutuellement pour définir une configuration d'engagement et de contact avec la face avant inférieure (16') du cylindre central (16) et s'éloignant mutuellement pour définir une condition de détachement par rapport à la face avant inférieure (16') du cylindre central (16).

6. Appareil de collecte selon la revendication 1, **caractérisé en ce que** le dispositif de levage (22) est mobile verticalement selon une direction axiale entre une configuration de contact avec une face avant inférieure (16') du cylindre central (16) et une configuration de détachement par rapport ledit cylindre central (16), la configuration de contact avec la face avant inférieure (16') du cylindre central (16) définissant une configuration d'accumulation ou de chargement d'un paquet (17') de plaques métalliques découpées (17) et la configuration de détachement par rapport au cylindre central (16) définissant une configuration de déchargement dudit paquet (17') de plaques métalliques (17), ledit dispositif de levage (22) comprenant un cône central (24) s'étendant perpendiculairement par rapport à une base (22B) et orienté dans la direction du cylindre central (16) et définissant un couplage précis entre le cylindre central (16) et le dispositif de levage (22) dans la configuration de contact.

7. Dispositif de collecte selon la revendication 6, **caractérisé en ce que** le dispositif de levage (22) comprend un bloc central (22') muni d'une base (22B) perpendiculaire à l'axe du bloc central (22') à l'extérieur de laquelle une paire d'appendices en saillie (22") est stabilisée, s'étendant verticalement à partir de ladite base (22B) dans la direction du cylindre central (20) pour définir un espace (23) pour accumuler un paquet (17') de plaques métalliques découpées (17).

8. Procédé pour collecter en vrac en couches paquets pour usage électrique, **caractérisé en ce qu'**il comprend les étapes:
- découpe des plaques métalliques (17);
- laisser tomber par gravité et accumuler lesdites plaques métalliques pour définir un paquet (17') sur le dispositif de levage (22);
- actionner la paire de leviers opposés (18) pour arrêter temporairement la chute des plaques métalliques découpées (17) en direction du dispositif de levage (22) ;
- actionner la paire de glissières opposées (20) pour soutenir le cylindre central (16);
- actionner la paire de leviers opposés (18) pour libérer la chute des plaques métalliques découpées (17) sur la paire de glissières opposées (20);
- actionner le dispositif de levage (22) vers le bas tout en s'éloignant du cylindre central (16) et décharger le paquet (17') de plaques métalliques (17) (20);
- actionner le dispositif de levage (22) vers le haut en contact avec le cylindre central (16) ;
- actionner la paire de glissières opposées (20) pour libérer par gravité les plaques métalliques découpées (17) sur le dispositif de levage (22).

9. Procédé selon la revendication 8, **caractérisé en ce que** l'étape consistant à actionner la paire de leviers opposés (18) pour libérer par gravité les plaques métalliques découpées (17) sur la paire de glissières opposées (20) se produit de manière synchronisée avec l'étape consistant à 30 actionnement du dispositif de levage (22) vers le bas tout en s'éloignant du cylindre central (16) et en déchargeant le paquet (17') de plaques métalliques (17).
